# EUROPÄISCHE PATENTSCHRIFT

(11) **EP 1 825 969 B1**
(45) Veröffentlichungstag und Bekanntmachung des Hinweises auf die Patenterteilung: **06.05.2009**
(21) Anmeldenummer: 07002918.6
(22) Anmeldetag: 12.02.2007
(51) Int. Cl.: B25J 15/00, B25J 15/02, B25J 15/08

(54) **Spann- oder Greifvorrichtung**
Clamping or gripping device
Dispositif de serra et de prise

(30) Priorität: 23.02.2006 DE 102006009423
(43) Veröffentlichungstag der Anmeldung: 29.08.2007
(73) Patentinhaber: Schunk GmbH & Co. KG Spann- und Greiftechnik, 74348 Lauffen am Neckar (DE)
(72) Erfinder: Härer, Samuel, 74354 Besigheim (DE); Haag, Matthias, Dr., 70191 Stuttgart (DE); Hoch, Andreas, 74388 Talheim (DE)
(74) Vertreter: Bulling, Alexander

(56) Entgegenhaltungen:
- EP-A1- 0 846 530
- WO-A-98/15393
- DE-A1- 3 806 148
- DE-A1- 19 604 649
- US-B1- 6 598 918

## Beschreibung

Die Erfindung betrifft eine Spann- oder Greifvorrichtung mit wenigstens zwei abschnittsweise zwischen einem Gehäuseabschnitt angeordneten und in die Arbeitsrichtungen aufeinander zu und voneinander weg bewegbaren Hauptbacken.

Derartige Vorrichtungen sind in vielfältiger Art und Weise aus dem Stand der Technik bekannt. Sie dienen zum Spannen oder Greifen von Werkstücken. Die Vorrichtungen können dabei insbesondere an Handhabungseinrichtungen, wie beispielsweise Roboterarmen, Verwendung finden.

Aus der DE 196 04 649 C2 ist beispielsweise bekannt geworden, zwei Hauptbacken über ein Keilhakengetriebe in die Arbeitsrichtungen zu bewegen. Über das Keilhakengetriebe wird zudem eine Synchronisation der Bewegung der Hauptbacken erreicht. Mit dem Keilhakengetriebe können zwar große Stellkräfte übertragen werden; dennoch wird insbesondere im zentralen Bereich der Vorrichtung Bauraum für das Keilhakengetriebe sowie des mit dem Keilhakengetriebe verbundenen Stellkolbens benötigt.

Aus der DE 196 50 431 A1 ist vorbekannt, Hauptbacken mittels senkrecht zu den Arbeitsrichtungen verlaufenden ZylinderKolben-Einheiten anzusteuern. Zur Synchronisation der Bewegung der Hauptbacken ist ein Zahnriemen vorgesehen. Durch Vorsehen der in Arbeitsrichtung hintereinander liegenden Kolben-Zylinder-Einheiten wird bei einer derartigen Greifvorrichtung entsprechend viel Bauraum benötigt. Zudem sind der Zahnriemen und die zugehörigen Ritzel zur Synchronisation der Bewegung der Hauptbacken erforderlich.

Aus der US 6, 598, 918 B1 ist eine Greifvorrichtung mit zwei in die Arbeitsrichtungen aufeinander zu und voneinander weg bewegbaren Hauptbacken bekannt geworden, bei der zwischen den Hauptbacken ein Gehäuseabschnitt angeordnet ist. Ferner ist ein im mittleren Bereich des Gehäuseabschnitts drehbar gelagertes Synchronisationsmittel zur Synchronisation der Bewegungen der Hauptbacken vorgesehen, das mit an den Hauptbacken fest angeordneten und Pins aufweisenden Synchronisationsstangen über in die Pins eingreifende Aussparungen zusammenwirkt.

Der vorliegenden Erfindung liegt die Aufgabe zugrunde, eine Spann- oder Greifvorrichtung der eingangs genannten Art bereitzustellen, die den Nachteilen des vorbekannten Standes der Technik abhilft. Insbesondere soll eine Spann- oder Greifvorrichtung bereitgestellt werden, die sehr kompakt baut, die funktionssicher arbeitet und mit der entsprechend große Greifkräfte zur Verfügung gestellt werden können. Ferner soll ein wenigstens abschnittsweise gleichzeitiges Bewegen der Hauptbacken auf einfache und platzsparende Art und Weise realisierbar sein.

Diese Aufgabe wird durch eine Spann- oder Greifvorrichtung mit de Merkmalen des Anspruchs 1 gelöst. Die Vorrichtung zeichnet sich dadurch aus, dass beide Hauptbacken mit einer auf der jeweils anderen Seite des Gehäuseabschnitts angeordneten, ihr zugehörigen Gegenbacke in die Arbeitsrichtungen bewegungsgekoppelt sind und dass zwischen der auf der gleichen Seite des Gehäuseabschnitts vorgesehenen Hauptbacke und Gegenbacke mechanische Synchronisationsmittel zur Synchronisation der beiden Bewegungen vorgesehen sind.

Aufgrund der Bewegungskopplung wenigstens einer Hauptbacke mit einer Gegenbacke erfolgt eine Synchronisation der beiden Hauptbacken miteinander, wenn die Gegenbacke mit der auf der gleichen Seite des Gehäuseabschnitts angeordneten Hauptbacke synchronisiert wird. Da die beiden mechanisch miteinander zu synchronisierenden Bauteile, die Hauptbacke und die ihr nicht zugehörigen Gegenbacke, auf der gleichen Seite des Gehäuseabschnitts angeordnet sind, kann zwischen diesen benachbarten Bauteilen vorteilhafterweise eine sehr platzsparende und insbesondere nicht im mittleren Bereich des Gehäuseabschnitt Bauraum beanspruchende Synchronisation erfolgen.

Insgesamt kann eine solche Spann- oder Greifvorrichtung insbesondere in Arbeitsrichtung sehr kompakt bauen. Zudem wird Bauraum im Bereich der Mittellängsachse nicht zwangsweise benötigt. Deshalb kann bei einer derartigen Spann- oder Greifvorrichtung im Bereich der Mittellängsachse beispielsweise ein Durchbruch vorgesehen sein, durch den eine optische Kontrolle des Greifvorgangs erfolgen kann.

Vorzugsweise sind am oder im Gehäuseabschnitt Antriebsmittel zum Bewegen der Hauptbacken und/oder der Gegenbacken vorgesehen sind. Als Antriebsmittel können im Gehäuseabschnitt wenigstens ein druckbeaufschlagbarer Zylinderraum vorgesehen sein, in den hauptbackenseitig beziehungsweise gegenbackenseitig angeordnete Kolbenabschnitte zum druckbeaufschlagten Bewegen der Hauptbacken beziehungsweise Gegenbacken eingreifen. Durch Vorsehen beispielsweise eines derartigen Zylinderraums, in den gegenbackenseitige Kolbenabschnitte eingreifen, kann beispielsweise ein gezielt ansteuerbares Voneinanderwegbewegen der Gegenbacken und aufgrund der Bewegungskopplung mit den Hauptbacken ein Aufeinanderzubewegen der Hauptbacken erreicht werden. Bei Vorsehen eines weiteren Zylinderraums im Gehäuseabschnitt, in dem hauptbackenseitig angeordnete Kolbenabschnitte eingreifen, kann entsprechend ein gezieltes Voneinanderwegbewegen der Hauptbacken erfolgen. Bei einer derartigen Ausführungsform können die beiden Zylinderräume unabhängig voneinander angesteuert werden, so dass beispielsweise durch Druckbeaufschlagen des einen Zylinderraums die Hauptbacken aufeinander zu und beim Druckbeaufschlagen des anderen Zylinderraums die Hauptbacken voneinander weg bewegt werden.

Als Antriebsmittel können erfindungsgemäß alternativ oder zusätzlich zu den Zylinderräumen im oder am Gehäuseabschnitt Federelemente vorgesehen sein, die die Gegenbacken beziehungsweise Hauptbacken kraftbeaufschlagen. Beispielsweise ist erfindungsgemäß denkbar, dass lediglich ein Zylinderraum vorgesehen ist, mit dem die Hauptbacken in eine Arbeitsrichtung bewegt werden. Das Rückführen der Hauptbacken kann dann beispielsweise durch entsprechend angeordnete Federelemente realisiert sein. Ferner ist erfindungsgemäß denkbar, dass zur Sicherung einer bestimmten Mindestgreifbeziehungsweise Mindestspannkraft Federelemente zwischen dem Gehäuseabschnitt und wenigstens einer Gegenbacke beziehungsweise Hauptbacke vorgesehen sind; dadurch kann beispielsweise bei ungewolltem Druckabfall eine Mindestgreifbeziehungsweise Mindestspannkraft über Federelemente zur Verfügung gestellt werden.

Gemäß einer Weiterbildung der Erfindung ist denkbar, dass der wenigstens eine Zylinderraum in Arbeitsrichtung verlaufend angeordnet und in axialer Richtung derart beidseitig offen ist, dass die hauptbackenseitig beziehungsweise gegenbackenseitig angeordneten Kolbenabschnitte in den Zylinderraum eingreifen können. Bei Druckbeaufschlagen des Zylinderraums bewegen sich folglich die Kolbenabschnitte axial nach außen. Vorteilhafterweise ist dabei eine Druckmittelzuführungsleitung im zentralmittleren Bereich des Druckzylinders vorgesehen. Aufgrund des Vorsehens von gleich großen Druckflächen an den Kolbenabschnitten kann ein weitgehend synchrones Bewegen der von diesem einen Druckzylinder angesteuerten Backen realisiert werden.

Eine vorteilhafte Anordnung des einen Zylinderraums und/oder der beiden Zylinderräume ergibt sich dann, wenn dieser beziehungsweise diese seitlich versetzt zur Mittellängsachse der Vorrichtung angeordnet sind. Bei Vorsehen von zwei Zylinderräume sind diese vorteilhafterweise in verschiedenen senkrecht zur Mittellängsachse verlaufenden Ebenen angeordnet. Eine derartige Anordnung hat den Vorteil, dass wie bereits eingangs erwähnt, ein Durchbruch im zentralen Bereich des Gehäuseabschnitt vorgesehen sein kann. Die Zylinderräume können dann seitlich neben einem derartigen Durchbruch im Gehäuseabschnitt vorgesehen sein.

Zur Bewegungskopplung der Hauptbacke mit der jeweiligen Gegenbacke kann erfindungsgemäß vorgesehen sein, dass zwischen der Hauptbacke und der jeweiligen Gegenbacke eine fest mit der Hauptbacke und der zugehörigen Gegenbacke verbundene Verbindungsstange vorgesehen ist. Die Verbindungsstange kann dabei vorteilhafterweise in gehäuseabschnittsseitigen Führungen, beispielsweise in Führungsbohrungen, verlaufen.

Die Synchronisationsmittel können dabei als im Gehäuseabschnitt beweglich geführte Zug- und/oder Druckübertragungsmittel ausgebildet sein. Beim Bewegen der Hauptbacke in die eine Arbeitsrichtung kann folglich die auf der gleichen Seite des Gehäuseabschnitts angeordnete Gegenbacke über Zugbeaufschlagung und/oder über Druckbeaufschlagung in die entsprechend entgegengesetzte Richtung bewegt werden. Mittels der Druckübertragungsmittel kann eine von der Gegenbacke beziehungsweise von der auf der gleichen Seite des Gehäuseabschnitts angeordneten Hauptbacke zum Gehäuseabschnitt hin gemachte Bewegung zu der auf der gleichen Seite des Gehäuseabschnitts vorgesehenen Hauptbacke beziehungsweise Gegenbacke umgelenkt und diese Hauptbacke beziehungsweise Gegenbacke vom Gehäuseabschnitt weg zwangsbewegt werden. Entsprechend verhält es sich bei Vorsehen von Zugübertragungsmitteln. Dabei wird eine von der Gegenbacke beziehungsweise von der auf der gleichen Seite des Gehäuseabschnitts angeordneten Hauptbacke vom Gehäuseabschnitt weg gemachte Bewegung zu der auf der gleichen Seite des Gehäuseabschnitts vorgesehenen Hauptbacke beziehungsweise Gegenbacke umgelenkt, so dass diese Haupt- beziehungsweise Gegenbacke durch Zugbeaufschlagung hin zum Gehäuseabschnitt zwangsbewegt wird.

Besonders vorteilhaft ist, wenn die Synchronisationsmittel wenigstens abschnittsweise um einen im mittleren Bereich der Längsachse verlaufenden, sich in axialer Richtung erstreckenden Durchbruch angeordnet sind. Dadurch kann, wie bereits erwähnt, der Greifvorgang optisch kontrolliert werden. Der Durchbruch kann dabei insbesondere als Kreiszylinder ausgebildet sein. In der Mantelfläche des Durchbruchs können dabei beispielsweise Führungsnuten für die Synchronisationsmittel angeordnet sein. Die Synchronisationsmittel können dann beispielsweise über den Durchbruch in die Führungsnuten eingefügt werden.

Die Synchronisationsmittel als solche können beispielsweise von Kugeln gebildet sein, die wenigstens abschnittsweise in einem im Gehäuseabschnitt von der einen Grundbacke zur auf der gleichen Seite des Gehäuseabschnitts angeordnete Gegenbacke verlaufenden Kugelgang angeordnet sind. Der Kugelgang verläuft dabei, wie bereits erwähnt, vorteilhafterweise in Draufsicht U-förmig um einen zentral angeordneten Durchbruch. Der Kugelgang kann dabei hin zum zentralen Durchbruch wenigstens abschnittsweise offen sein.

Die Synchronisationsmittel können erfindungsgemäß zur Umlenkung der Bewegung der Hauptbacke beziehungsweise der Gegenbacke ein sich wenigstens über etwa um 180° erstreckendes Umlenkelement umfassen, das unmittelbar oder mittelbar über Zwischenelemente mit der jeweiligen Hauptbacke und Gegenbacke zusammenwirkt. Das Umlenkelement ist dabei vorteilhafterweise wenigstens abschnittsweise bedingt drehbar um die Mittellängsachse der Greifvorrichtung oder um eine hierzu parallel verlaufende Achse im oder am Gehäuseabschnitt angeordnet. Das Umlenkelement kann dabei in einer senkrecht oder schräg zur Mittellängsachse verlaufenden Ebene oder auf einem Abschnitt einer spiralförmigen Linie angeordnet sein. Beim Vorsehen von Zwischenelementen können diese beispielsweise als separat ausgebildete Bauteile realisiert sein. Sie können auch einseitig an das Umlenkelement und/oder an die Backen, mit denen sie zusammenwirken, angeformt oder an diesen angeordnet sein. Zwischenelemente können insbesondere kugelartig oder stiftartig ausgebildet sein. Das Umlenkelement kann dabei beispielsweise ring- oder scheibenförmig ausgebildet sein.

Bei Vorsehen von Zwischenelementen erfolgt die Synchronisation beispielsweise folgendermaßen. Aufgrund der Antriebsmittel werden die beiden Hauptbacken beispielsweise voneinander weg bewegt. Die der einen Hauptbacke zugehörige Gegenbacke wird aufgrund der starren Verbindung mit der Hauptbacke in Richtung des Gehäuseabschnitts bewegt. Hierbei drückt sie ein im Gehäuseabschnitt beweglich angeordnetes erstes Zwischenelement in den Gehäuseabschnitt ein. Das erste Zwischenelement wirkt gegen das Umlenkelement, welches die axiale Bewegung des Zwischenelements um 180° umlenkt. Auf der dem ersten Zwischenelement abgewandten Seite wirkt das Umlenkelement gegen ein zweites Zwischenelement. Das zweite Zwischenelement wird folglich aus dem Gehäuseabschnitt herausbewegt und beaufschlagt die auf der gleichen Seite wie diese Gegenbacke angeordnete Hauptbacke nach axial außen weg vom Gehäuseabschnitt. Insofern erfolgt eine druckbeaufschlagte Synchronisation der beiden Hauptbacken in die Arbeitsrichtungen voneinander weg.

Das Umlenkelement kann dabei als ein im Wesentlichen zylindrisch verlaufender, sich über etwa 180° erstreckender Ringabschnitt ausgebildet sein. Der Ringabschnitt ist dabei wenigstens bedingt um den Mittelpunkt, auf dessen Kreislinie er liegt, drehbar. Dabei können die freien Enden des Ringabschnitts entweder unmittelbar mit der jeweiligen Haupt- und Gegenbacke zusammenwirken oder über Zwischenelemente.

Gemäß einer alternativen Ausgestaltung der Erfindung ist das Ringelement als Vollring ausgebildet, wobei dieser Vollring wenigstens zwei in Draufsicht um etwa 180° beabstandete beziehungsweise versetzte Anlageabschnitte für vorzusehende Zwischenelemente aufweist. Die Draufsicht ist dabei die Ansicht entlang der Mittellängsachse. Das Vorsehen eines Vollrings hat den Vorteil, dass dieser um seine Mittellängsachse im Gehäuseabschnitt auf einfache Art und Weise drehbar lagerbar ist. Durch Vorsehen der Anlageabschnitte an geeigneten Stellen des Vollrings kann die Bewegung der auf der einen Seite des Gehäuseabschnitts vorgesehenen Backe auf die andere, auf der gleichen Seite vorgesehene Backe erreicht werden.

Die Anlageabschnitte können dabei in verschiedenen senkrecht zur Mittellängsachse verlaufenden Ebenen liegen. Insbesondere können insgesamt vier Anlageabschnitte vorgesehen sein, wobei jeweils zwei davon auf der axial oberen Seite und zwei davon auf der axial unteren Seite des Vollrings angeordnet sind. Dabei sind insbesondere zwei um 180° versetzt angeordnete Anlageabschnitte zur Anlage von je einem mit der Haupt- und Gegenbacke auf der einen Seite des Gehäuseabschnitts zusammenwirkenden Zwischenelement und zwei weitere um 180° versetzt angeordnete Anlageabschnitte zur Anlage von je einem mit der Haupt- und Gegenbacke auf der anderen Seite des Gehäuseabschnitts zusammenwirkenden Zwischenelement vorgesehen. Durch Vorsehen von insgesamt vier Anlageabschnitten kann eine Synchronisation über Druckbeaufschlagungsmittel in beide Arbeitsrichtungen der Hauptbacken realisiert werden.

Eine weitere vorteilhafte Ausbildung der Erfindung zeichnet sich dadurch aus, dass je ein auf der Oberseite und ein auf der Unterseite angeordneter Anlageabschnitt über wenigstens je ein Zwischenelement mit jeweils den auf der gleichen Seite des Gehäuseabschnitts angeordneten Backen zusammenwirkt.

Gemäß einer weiteren vorteilhaften Ausgestaltung der Erfindung kann vorgesehen sein, dass ein Durchbruch im zentralen Bereich des Gehäuseabschnitts und ein in axialer Richtung in den Durchbruch einführbare Fügehilfe derart vorgesehen ist, dass bei in den Durchbruch eingeführter Fügehilfe auf den Hauptbacken angeordnete, in die Arbeitsrichtungen einstellbare Greiffinger zentrisch gegen Anlageabschnitte der Fügehilfe zum Anschlagen gebracht und danach an den Hauptbacken festgesetzt werden können. Die Fügehilfe, die insbesondere mittels einer Spielpassung in den axialen Durchbruch einführbar ist, dient folglich zum kalibrieren der Vorrichtung. Die auf den Backen anordnenbare, insbesondere festschraubbaren Greiffinger können mittels der Fügehilfe exakt zentrisch zum Durchbruch, und damit zur Mittellängsachse der Vorrichtung ausgerichtet werden.

Weitere Einzelheiten und vorteilhafte Ausgestaltungen der Erfindung sind der folgenden Beschreibung zu entnehmen, anhand derer zwei Ausführungsbeispiele der Erfindung näher beschrieben und erläutert sind.

Es zeigen:
- Figur 1 und 2: verschiedene perspektivische Ansichten einer ersten erfindungsgemäßen Greifvorrichtung,
- Figur 3: die Greifvorrichtung gemäß Figur 1 und 2 in Explosionsdarstellung,
- Figur 4: einen Schnitt durch die Greifvorrichtung gemäß Figur 1 und 2 entlang der Linie B-B der Figur 6,
- Figur 5: einen Schnitt durch Figur 4 entlang der Linie A-A,
- Figur 6: einen Schnitt durch die Figur 4 entlang der Linie H-H,
- Figur 7: entspricht Figur 4,
- Figur 8: einen Schnitt entlang der Linie S-S in Figur 7 und
- Figur 9: zeigt einen Schnitt entlang der Linie G-G in Figur 7,
- Figur 10 und 11: verschiedene perspektivische Ansichten einer zweiten erfindungsgemäßen Greifvorrichtung,
- Figur 12: die Greifvorrichtung gemäß Figur 10 und 11 in Explosionsdarstellung und
- Figur 13: einen Schnitt durch die Greifvorrichtung gemäß Figur 10 und 11 entlang der Linie B-B in Figur 15,
- Figur 14: einen Schnitt durch Figur 13 entlang der Linie T-T,
- Figur 15: einen Schnitt durch Figur 13 entlang der Linie H-H,
- Figur 16: entspricht Figur 13,
- Figur 17: einen Schnitt durch Figur 16 entlang der Linie A-A;
- Figur 18: einen Schnitt durch Figur 16 entlang der Linie G-G; und
- Figur 19: ein in der Figur 5 entsprechenden Schnitt mit einer Fügehilfe.

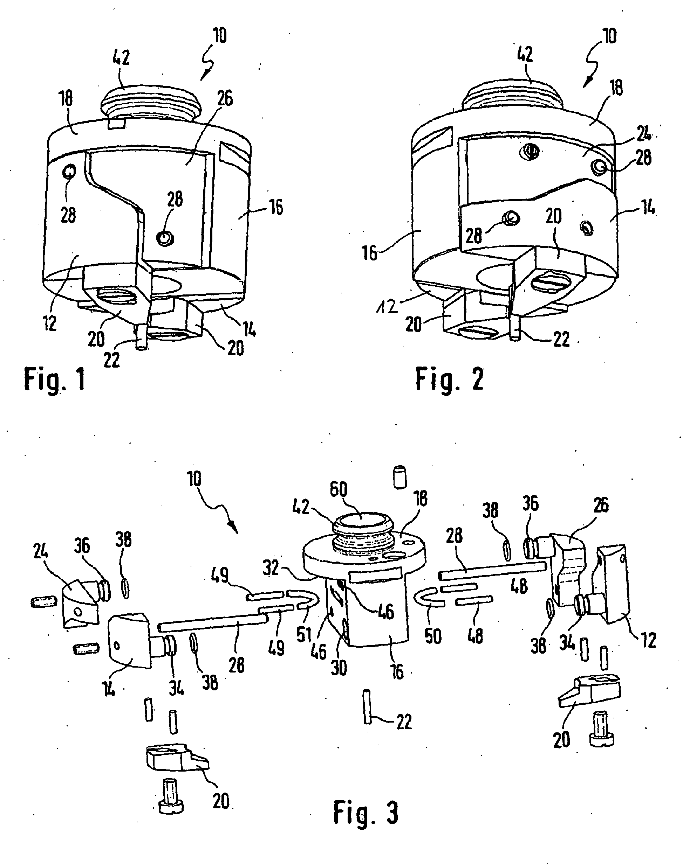

Die in den Figuren 1 bis 9 dargestellte erste erfindungsgemäße Greifvorrichtung 10 umfasst zwei aufeinander zu und voneinander weg bewegbare Hauptbacken 12 und 14. Die beiden Hauptbacken 12 und 14 sind zwischen einem Gehäuseabschnitt 16 eines Grundgehäuses 18 angeordnet. An den Hauptbacken 12 und 14 ist jeweils ein Greiffinger 20 vorgesehen, wobei die Greiffinger in der in den Figuren 1 - 9 dargestellten Greifposition ein Werkstück 22 greifen.

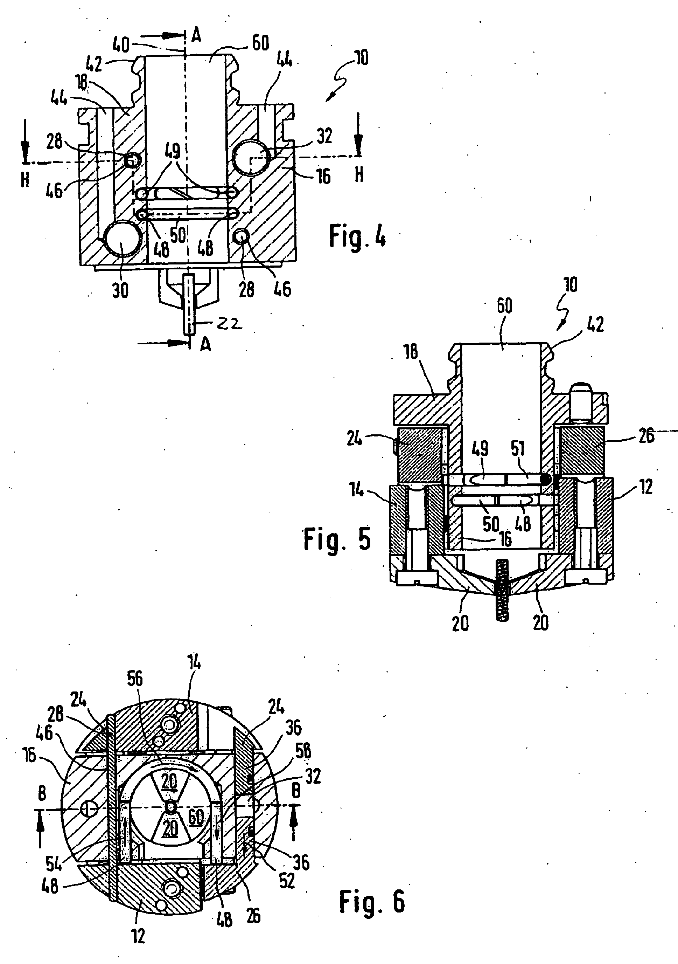

Die Hauptbacken 12 und 14 sind mit jeweils einer auf der jeweils anderen Seite des Gehäuseabschnitts 16 angeordneten Gegenbacke 24 und 26 in die Arbeitsrichtungen der Hauptbacken 12, 14 aufeinander zu und voneinander weg starr bewegungsgekoppelt. Die Bewegungskopplung wird dabei über Verbindungselemente in Form von Verbindungsstangen 28 realisiert, die einerseits fest an der einen Hauptbacke 12 beziehungsweise 14 und andererseits fest an der zugehörigen Gegenbacke 24 beziehungsweise 26 angeordnet sind. Bewegt sich also die Hauptbacke 12 beispielsweise weg vom Gehäuseabschnitt 16, so wird aufgrund der Bewegungskopplung mit der Gegenbacke 24 die Gegenbacke 24 hin zum Gehäuseabschnitt bewegt. Entsprechend wird beim Wegbewegen der Gegenbacke 26 vom Gehäuseabschnitt 16 die Hauptbacke 14 aufgrund der starren Verbindung mit der Gegenbacke 26 hin zum Gehäuseabschnitt 16 bewegt. Die Verbindungsstangen 28 sind im Grundgehäuse 18 beziehungsweise im Gehäuseabschnitt 16 vorgesehenen Führungen 46, beispielsweise in Form von Durchgangsbohren, geführt. Die Führungen sind insbesondere in den Schnitten gemäß der Figuren 4, 6, 7 und 8 deutlich zu erkennen.

Zum Bewegen der Hauptbacken 12, 14 beziehungsweise der Gegenbacken 24, 26 sind im Gehäuseabschnitt Antriebsmittel in Form von zwei wechselseitig druckbeaufschlagbaren Zylinderräumen 30 und 32 vorgesehen. Die Zylinderräume verlaufen parallel zur Arbeitsrichtung der Backen und erstrecken sich über die gesamte Breite des Gehäuseabschnitts 16. Die Zylinderräume 30, 32 sind beidseitig in axialer Richtung offen. In die offen Stirnseiten der Zylinderräume 30, 32 greifen backenseitige Kolbenabschnitte 34, 36 ein, wobei die in den Zylinderraum 30 eingreifenden Kolbenabschnitte 34 hauptbackenseitig angeordnet sind und die in den Zylinderraum 32 eingreifenden Kolbenabschnitte 36 gegenbackenseitig angeordnet sind. Die einzelnen Kolbenabschnitte umfassen zur Abdichtung der Zylinderräume 30, 32 Dichtringe 38.

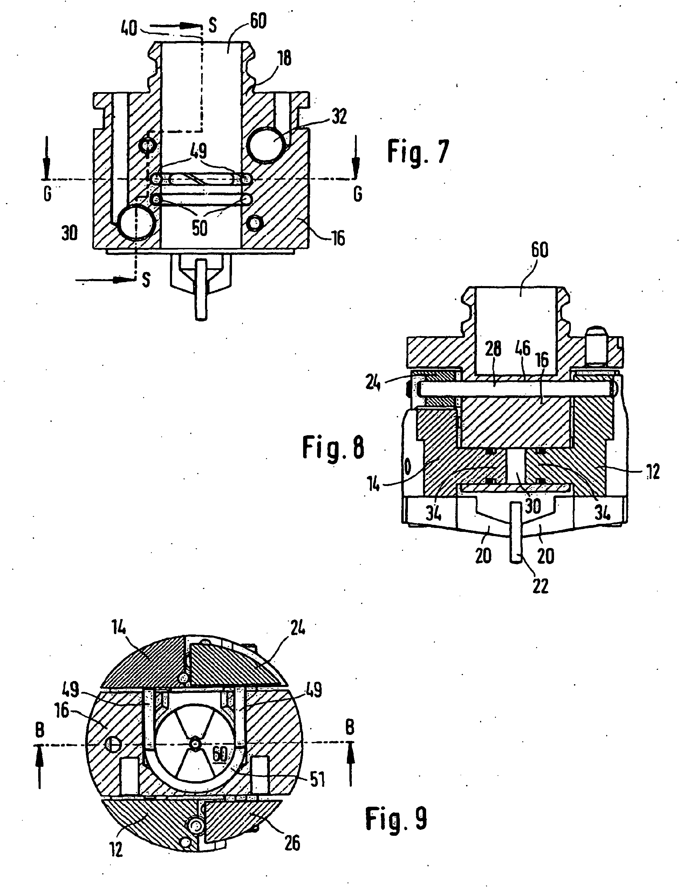

Wie insbesondere aus den beiden identischen Längsschnitten durch die Breitseite des Gehäuseabschnitts 16 gemäß den Figuren 4 und 7 deutlich wird, sind die beiden Zylinderräume 30, 32 zur Mittellängsachse 40 seitlich versetzt angeordnet. Zudem liegen die beiden Zylinderräume 30, 32 in unterschiedlichen senkrecht zur Mittellängsachse 40 verlaufenden Ebenen. Der Zylinderraum 32 ist näher an einen gehäuseseitigen Befestigungsflansch 42 angeordnet als der Zylinderraum 30. Aus den Figuren 4 und 7 wird zudem deutlich, dass im zentral mittleren Bereich der Zylinderräume 30, 32 axial zur Mittellängsachse 40 verlaufende Druckmittelkanäle 44 vorgesehen sind. Durch diese Kanäle können die Zylinderräume 30, 32 druckbeaufschlagt beziehungsweise drucklos geschaltet werden.

Wird im montierten Zustand der Greifvorrichtung 10 der Druckraum 30 druckbeaufschlagt, so bewegen sich die beiden Hauptbacken 12 und 14 in die Arbeitsrichtung voneinander weg. Aufgrund der starren Verbindung mit den jeweiligen Gegenbacken 24, 26 bewegen sich die Gegenbacken 24, 26 aufeinander zu. Entsprechend bewegen sich beim Druckbeaufschlagen des Zylinderraums 32 die Gegenbacken 24, 26 in die Arbeitsrichtung voneinander weg; die Hauptbacken 12 und 14 werden dann aufeinander zu bewegt.

Erfindungsgemäß kann vorgesehen sein, dass als Antriebsmittel im oder am Gehäuseabschnitt Federelemente vorgesehen sind, die die Gegenbacken 24, 26 beziehungsweise Hauptbacken 12, 14 druckbeaufschlagen. Ein derartiges Federelement kann beispielsweise in einem der Zylinderräume 30, 32 vorgesehen sein und die jeweiligen Backen nach axial außen druckbeaufschlagen. Dadurch werden die jeweiligen Backen in eine Arbeitsrichtung aufgrund der von dem Federelement bereitgestellten Federkraft bei Druckfreischalten des anderen Zylinderraums bewegt.

Alternativ oder zusätzlich kann vorgesehen sein, dass sich Federelemente einerseits am Gehäuseabschnitt abstützen und andererseits gegen die jeweiligen Backen wirken. Denkbar ist beispielsweise, dass über Federelemente eine Mindestspannkraft der Greifvorrichtung bereitgestellt werden kann. Diese Mindestspannkraft kommt dann zum Tragen, wenn beispielsweise ein ungewollter Druckabfall in dem Zylinderraum stattfindet, der zum Spannen der Werkstücke druckzubeaufschlagen ist.

Zur Synchronisation der Bewegungen der Hauptbacken 12, 14 und Gegenbacken 24, 26 sind zwischen der auf den jeweils gleichen Seiten des Gehäuseabschnitts vorgesehenen Hauptbacke 12 und Gegenbacke 26 sowie Hauptbacke 14 und Gegenbacke 24 Synchronisationsmittel vorgesehen. Die Synchronisationsmittel sind dabei von jeweils zwei stiftartigen Zwischenelementen 48, 49 und einem wesentlichen zylindrisch ausgebildeten, sich über etwa 180° erstreckenden Ringabschnitt 50, 51 gebildet.

Aus Figur 6, die einen Schnitt durch die Teilebene, in der die Zwischenelemente 48 und der Ringabschnitt 50 liegen, zeigt, wird deutlich, dass der Ringabschnitt 50 in einer um die Mittellängsachse 40 verlaufenden, im Gehäuseabschnitt 16 vorgesehenen Führung um die Mittellängsachse 40 bedingt bewegbar angeordnet ist. An die beiden freien Seiten des Ringabschnitts 50 schließen sich in Arbeitsrichtung der Backen die ebenfalls im Gehäuseabschnitt 16 verschieblich gelagerten Zwischenelemente 48 an. Die jeweils dem Ringabschnitt 50 abgewandte Seite der Zwischenelemente 48 dient dabei zur Anlage gegen die Hauptbacke 12 beziehungsweise die Gegenbacke 26.

Wird beispielsweise der Zylinderraum 32 mit Druck beaufschlagt, so werden, wie insbesondere aus Figur 6 deutlich wird, die beiden Kolbenabschnitte 36 in axialer Richtung voneinander weg bewegt. Einher damit geht die Bewegung der beiden Gegenbacken 24, 26 in die voneinander weg gerichtete Richtung, wobei die Gegenbacke 26 in Richtung des Pfeils 52 bewegt wird. Aufgrund der Bewegungskopplung über die Verbindungsstifte 28 werden die beiden Hauptbacken 12 und 14 hin zum Gehäuseabschnitt 16 bewegt. Wie aus Figur 6 deutlich wird, drückt dabei die Hauptbacke 12 das mit ihr zusammenwirkende Zwischenelement 48 in den Gehäuseabschnitt 16 in Richtung des Pfeils 54 in Figur 6. Der Ringabschnitt 50 wird dadurch um die Mittellängsachse 40 in Richtung des Pfeils 56 bewegt. Das zwischen dem Ringabschnitt 50 und der Gegenbacke 26 vorgesehene Zwischenelement 48 wird aufgrund der Bewegung des Ringabschnitts in Richtung des Pfeils 58 abschnittsweise aus dem Gehäuseabschnitt 16 herausgedrückt und wirkt folglich gegen die Gegenbacke 26. Insgesamt wird dadurch die Bewegung der Hauptbacke 12 hin zum Gehäuseabschnitt 16 mit der Bewegung der Gegenbacke 26 weg vom Gehäuseabschnitt 16 synchronisiert.

Durch Vorsehen der Zwischenelemente 49 und des Ringabschnitts 51 zwischen der Hauptbacken 14 und der Gegenbacke 24 wird entsprechend die Bewegung der Gegenbacke 24 hin zum Gehäuseabschnitt 16 mit der Bewegung der Hauptbacke 14 weg vom Gehäuseabschnitt 16 synchronisiert. Im Schnitt gemäß Figur 9 sind der Ringabschnitt 51 und die Zwischenelemente 49, die gegen die Hauptbacke 14 und die Gegenbacke 24 wirken, dargestellt, wobei die Zwischenelemente 48, 49 und die Ringabschnitte 50, 51 in entsprechenden Führungen im Gehäuseabschnitt 16 zwangsgeführt angeordnet sind. Beim Druckbeaufschlagen des Zylinderraums 30 wird folglich die Hauptbacke 12 weg vom Gehäuseabschnitt bewegt, wodurch die mit ihr starr gekoppelte Gegenbacke 24 hin zum Gehäuseabschnitt beaufschlagt wird. Die Gegenbacke 24 drückt dann das ihr zugewandte Zwischenelement 49 in den Gehäuseabschnitt 16. Hierdurch wird der Ringabschnitt 51 um die Mittellängsachse bedingt bewegt und wirkt gegen das der Hauptbacke 14 zugewandte Zwischenelement 49. Dieses Zwischenelement 49 drückt dann die Hauptbacke 14 weg vom Gehäuseabschnitt 16.

Bei der in der Figur 1 bis 9 dargestellten Greifvorrichtung 10 sind als Synchronisationsmittel jeweils drei Bauteile vorgesehen. Anstelle von drei einzelnen Bauteilen ist denkbar, dass lediglich ein unter Druck wenigstens weitgehend nicht komprimierbares Bauteil Verwendung findet, welches allerdings in Querrichtung bedingt elastisch ausgebildet ist, so dass es die von der jeweiligen Backe hin zum Gehäuseabschnitt 16 gemachte Bewegung um 180° zur auf der gleichen Seite des Gehäuseabschnitts vorgesehenen Backe umlenkt.

Anstelle des Ringabschnitts 50, 51 und/oder der Zwischenelemente 48, 49 können auch Kugeln zur Bewegungsübertragung Verwendung finden. Besonders vorteilhaft ist, anstelle des Ringabschnitts 50, 51 Kugelelemente vorzusehen, die die Bewegung um 180° umlenken. Die Kugelelemente können dann mit stiftartigen Zwischenelementen 48, 49, wie sie in den Figuren 1 bis 9 gezeigt sind, zusammenwirken .

Wie insbesondere aus den Figuren 4 bis 6 deutlich wird, weist das Grundgehäuse 18 im zentral mittigen Bereich einen axial verlaufenden Durchbruch 60 auf. Bei Draufsicht auf die Greifvorrichtung 10 sind deshalb die Greiffinger 20, wie in Figur 6 und 9 dargestellt, von axial oben zu sehen. Das Vorsehen eines derartigen Durchbruchs hat den Vorteil, dass eine optische Kontrolle der Greifvorrichtung, beispielsweise mittels optischer Sensoren oder einer Kamera, erfolgen kann, oder dass ein Laserstrahl durch diesen Durchbruch hindurchgeführt werden kann.

Bei der Greifvorrichtung 10 gemäß den Figuren 1 bis 9 sind die Synchronisationsmittel als reine Druckübertragungsmittel ausgebildet. Gemäß der Erfindung ist denkbar, dass die Synchronisationsmittel auch als Zugübertragungsmittel ausgebildet sein können.

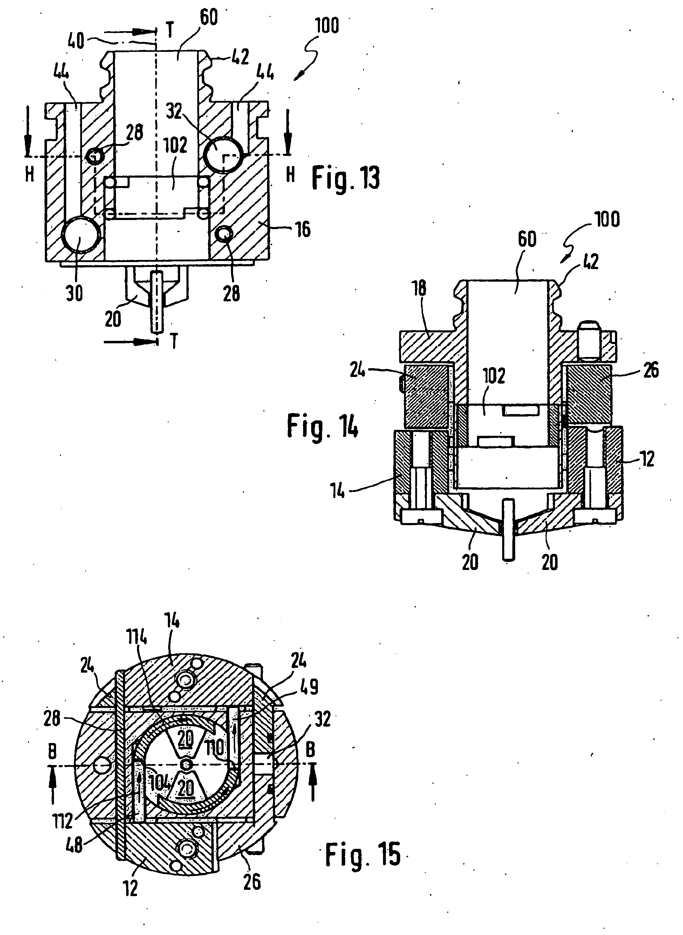

Die Schnitte gemäß den Figuren 13 bis 18 entsprechen den Schnitten gemäß den Figuren 4 bis 9.

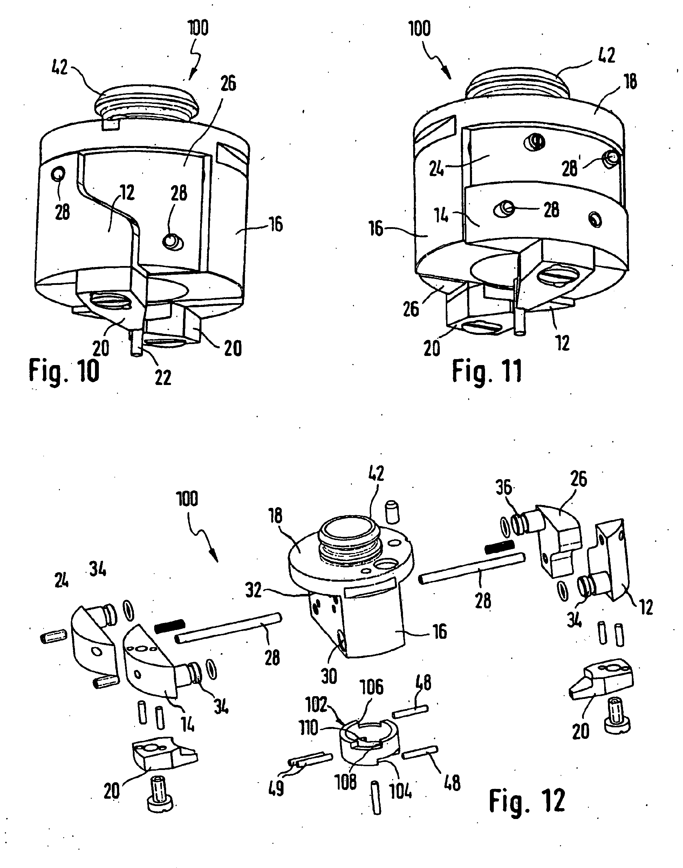

Die in den Figuren 10 bis 18 dargestellte Greifvorrichtung 100 entspricht im Wesentlichen der Greifvorrichtung 10 gemäß den Figuren 1 bis 9. Entsprechende Bauteile sind mit entsprechenden Bezugszeichen versehen. Hauptunterschied der beiden Greifvorrichtungen 10 und 100 ist, dass die Greifvorrichtung 100 als Synchronisationsmittel keine Ringabschnitt vorsieht, sondern ein als Vollring 102 ausgebildetes Umlenkelement aufweist, vergleiche dazu insbesondere Figuren 13, 14.

Der Vollring 102 weist für die stiftförmig ausgebildeten Zwischenelemente insgesamt vier Anlageabschnitte 104, 106, 108 und 110 auf. Die Anlageabschnitte 106 und 108 sind dabei auf der axialen Oberseite des Vollrings 102 und die Anlageabschnitte 104 und 110 auf der axialen Unterseite des Vollrings 102 angeordnet. Es wirkt je ein auf der Oberseite und ein auf der Unterseite angeordneter Anlageabschnitt, nämlich die Anlageabschnitte 104 und 106 sowie die Anlageabschnitte 108 und 110, über je ein Zwischenelement 48 beziehungsweise 49 mit den jeweils auf der gleichen Seite des Gehäuseabschnitts angeordneten Backen zusammen.

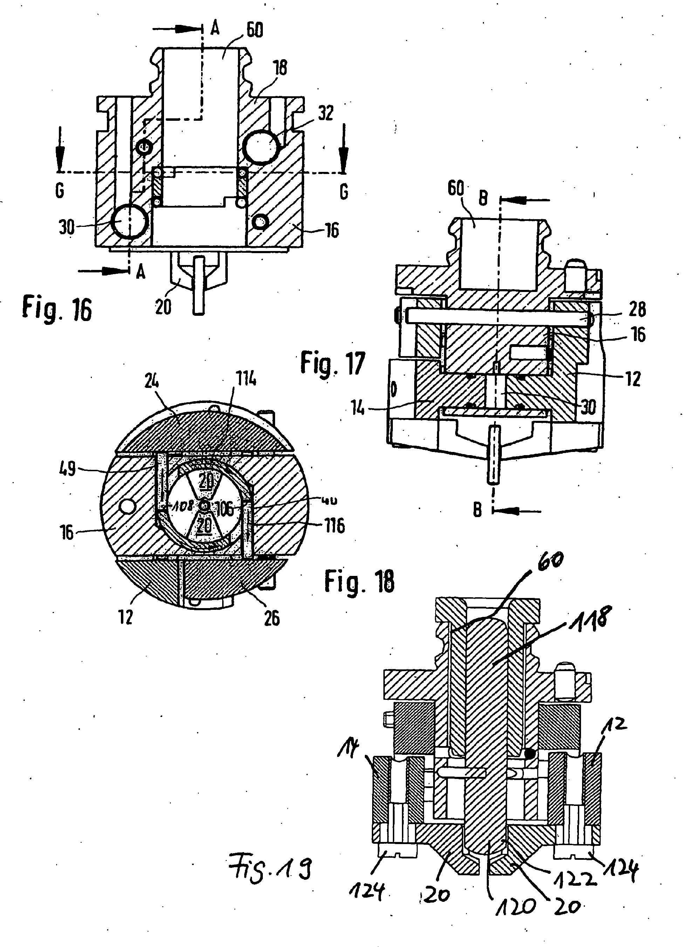

Aus dem Schnitt gemäß Figur 15 wird in diesem Zusammenhang deutlich, dass die Hauptbacke 12 über das ihr zugeordnete Zwischenelement 48 mit dem Anlageabschnitt 104 zusammenwirkt. Dadurch wird beim Druckbeaufschlagen des Zylinderraums 32 die Hauptbacke 12 über die Gegenbacke 24 und die zugehörige Verbindungsstange 28 in Richtung des Pfeils 112 bewegt. Dadurch wird der Vollring 102 um die Mittellängsachse 40 in Richtung des Pfeils 114 bewegt. Aufgrund dieser Bewegung wird das auf der Unterseite des Vollrings, in Figur 18 dargestellte Zwischenelement 48 über den Anlageabschnitt 106 in Richtung des Pfeils 116 auf die Gegenbacke 26 zu bewegt. Die Synchronisation der Hauptbacke 14 mit der Gegenbacke 24 erfolgt entsprechend über das in Figur 18 dargestellte Zwischenelement 49, das am Anlageabschnitt 108 des Vollrings 102 anliegt und über das auf der Unterseite des Vollrings am Anlageabschnitt 110, in Figur 15 zu sehende Zwischenelement 49 hin zur Hauptbacke 114.

Der in der Figur 19 dargestellte Schnitt entspricht im wesentlichen dem Schnitt gemäß Figur 5, wobei im Durchbruch 60 eine in axialer Richtung mittels einer Spielpassung in den Durchbruch 60 einführbare, stiftartig ausgebildete Fügehilfe 118 im Durchbruch 60 vorgesehen ist. Die Fügehilfe 118 ist rotationssymmetrisch ausgebildet und weist an ihrem freien Ende 120 Anlageabschnitte 122 zur Anlage der Greiffinger auf. Die Greiffinger 20, die mittels Befestigungsschrauben 124 an der jeweiligen Hauptbacke befestigt sind, können vor dem Festziehen der Befestigungsschrauben 124 durch Anliegen an die Anlageabschnitte 120 der Fügehilfe 118 zentriert werden. Nach der Zentrierung können die Greiffinger 120 dann mittels den Befestigungsschrauben 124 an der jeweiligen Hauptbacke 12, 14 festgesetzt werden. Danach kann die Fügehilfe 118 in axialer Richtung aus dem Durchbruch 60 herausgenommen werden.

## Patentansprüche

1. Spann- oder Greifvorrichtung (10, 100) mit zwei in die Arbeitsrichtungen aufeinander zu und voneinander weg bewegbaren Hauptbacken (12, 14), zwischen denen wenigstens abschnittsweise ein Gehäuseabschnitt (16) angeordnet ist , **dadurch gekennzeichnet, dass** beide Hauptbacken (12, 14) mit einer auf der jeweils anderen Seite des Gehäuseabschnitts (16) angeordneten, ihr zugehörigen Gegenbacke (24, 26) in die Arbeitsrichtungen bewegungsgekoppelt sind, wobei zwischen der auf der gleichen Seite des Gehäuseabschnitts (16) vorgesehenen Hauptbacke (12, 14) und Gegenbacke (24, 26) Synchronisationsmittel (48, 49, 50, 51, 102) zur Synchronisation der beiden Bewegungen vorgesehen sind.

2. Vorrichtung (10, 100) nach Anspruch 1, **dadurch gekennzeichnet, dass** am oder im Gehäuseabschnitt (16) Antriebsmittel (30, 32) zum Bewegen der Hauptbacken (12, 14) und der Gegenbacken (24, 26) in die Arbeitsrichtungen vorgesehen sind.

3. Vorrichtung (10, 100) nach Anspruch 1, **dadurch gekennzeichnet, dass** als Antriebsmittel im Gehäuseabschnitt (16) wenigstens ein druckberaufschlagbarer Zylinderraum (30, 32) vorgesehen ist, in den hauptbackenseitig bzw. gegenbackenseitig angeordnete Kolbenabschnitte (34, 36) zum druckbeaufschlagten Bewegen der Hauptbacken (12, 14) bzw. Gegenbacken (24, 26) eingreifen.

4. Vorrichtung (10, 100) nach Anspruch 1. oder 2, **dadurch gekennzeichnet, dass** als Antriebsmittel im oder am Gehäuseabschnitt Federelemente vorgesehen sind, die die Gegenbacken (24, 26) bzw. Hauptbacken (12, 14) druckbeaufschlagen.

5. Vorrichtung (10, 100) nach Anspruch 2 oder 3, **dadurch gekennzeichnet, dass** der wenigstens eine Zylinderraum (30,32) in Arbeitsrichtung verlaufend angeordnet und in axialer Richtung derart beidseitig offen ist, dass die hauptbackenseitig bzw. gegenbackenseitig angeordneten Kolbenabschnitte (34, 36) in den Zylinderraum (30, 32) eingreifen.

6. Vorrichtung (10, 100) nach Anspruch 2, 3 oder 4, **dadurch gekennzeichnet, dass** der wenigstens eine Zylinderraum (30, 32) seitlich versetzt zur Mittellängsachse (40) der Vorrichtung angeordnet ist und/oder dass bei Vorsehen von zwei Zylinderräumen (30, 32) diese in verschiedenen senkrecht zur Mittellängsachse (40) verlaufenden Ebenen liegen.

7. Vorrichtung (10, 100) nach einem der vorhergehenden Ansprüche, **dadurch gekennzeichnet, dass** die eine Hauptbacke oder beide Hauptbacken (12, 14) über eine Verbindungsstange (28) mit der ihr zugehörigen Gegenbacke (19,26) bewegungsgekoppelt ist oder sind.

8. Vorrichtung (10, 100) nach Anspruch 7, **dadurch gekennzeichnet, dass** die Verbindungsstange (28) in gehäuseabschnittseitigen Führungen (46) geführt ist.

9. Vorrichtung 10, 100) nach wenigstens einem der vorhergehenden Ansprüche, **dadurch gekennzeichnet, dass** die Synchronisationsmittel (48, 49, 50, 51, 102) als im Gehäuseabschnitt (16) beweglich geführte Zug- und/oder Druckübertragungsmittel ausgebildet sind.

10. Vorrichtung (10, 100) nach wenigstens einem der vorhergehenden Ansprüche, **dadurch gekennzeichnet, dass** die Synchronisationsmittel (48, 49, 50, 51, 102) um einen im Bereich der Mittellängsachse (40) verlaufenden, sich in axialer Richtung erstreckenden Durchbruch (60) angeordnet sind.

11. Vorrichtung (10, 100) nach wenigstens einem der vorhergehenden Ansprüche, **dadurch gekennzeichnet,dass** die Synchronisationsmittel Kugeln umfassen, die wenigstens abschnittsweise in einem im Gehäuseabschnitt (16) von der einen Grundbacke (12, 14) zur auf der gleichen Seite des Gehäuseabschnitts angeordneten Gegenbacke (24, 26) verlaufenden Gang angeordnet sind.

12. Vorrichtung (10, 100) nach wenigstens einem der vorhergehenden Ansprüche, **dadurch gekennzeichnet, dass** die Synchronisationsmittel zur Umlenkung der Bewegung der Hauptbacke (12, 14) bzw. der Gegenbacke (24, 26) ein sich wenigstens über etwa um 180° erstreckendes Umlenkelement (50, 51, 102) umfassen, das unmittelbar oder mittelbar über Zwischenelemente (48, 49) mit der jeweiligen Hauptbacke (12, 14) und Gegenbacke (24, 26) zusammenwirkt.

13. Vorrichtung (10) nach Anspruch 12, **dadurch gekennzeichnet, dass** das Umlenkelement (50, 51) als ein im wesentlich zylindrisch verlaufender, sich über etwa 180° erstreckender Ringabschnitt ausgebildet ist.

14. Vorrichtung (100) nach Anspruch 12, **dadurch gekennzeichnet, dass** das Umlenkelement (102) als Vollring mit wenigstens zwei in Draufsicht um etwa 180° beabstandeten Anlageabschnitten (104, 106, 108, 110) für Zwischenelemente ausgebildet ist.

15. Vorrichtung (100) nach Anspruch 14, **dadurch gekennzeichnet, dass** die Anlageabschnitte (104, 106, 108, 110) in verschiedenen senkrecht zur Mittellängsachse verlaufenden Ebenen liegen.

16. Vorrichtung (100) nach Anspruch 14 oder 15, **dadurch gekennzeichnet, dass** insgesamt vier Anlageabschnitte (104, 106, 108, 110) vorgesehen sind, wobei jeweils zwei davon auf der axialen Oberseite und zwei auf der axialen Unterseite des Vollrings (102) angeordnet sind.

17. Vorrichtung (100) nach Anspruch 16, **dadurch gekennzeichnet, dass** je ein auf der Oberseite und ein auf der Unterseite angeordneter Anlageabschnitt (104, 106, 108, 110) über wenigstens je ein Zwischenelement (48, 49) mit einer Hauptbacke (12, 14) und Gegenbacke (24, 26) auf jeweils einer Seite des Gehäuseabschnitts (16) zusammenwirkt.

18. Vorrichtung (100) nach wenigstens einem der vorhergehenden Ansprüche, **dadurch gekennzeichnet, dass** ein Durchbruch (60) im zentralen Bereich drei Gehäuse abschnitts (16) und eine in axialer Richtung in den Durchbruch (60) einführbare Fügehilfe (118) derart vorgesehen ist, dass bei in den Durchbruch (60) eingeführter Fügehilfe (118) auf den Hauptbacken (12, 14) angeordnete, in die Arbeitsrichtungen einstellbare Greiffinger (20) zentrisch gegen Anschlagabschhitte (120) der Fügehilfe (118) zum Anschlagen gebracht und danach an den Hauptbacken festgesetzt werden können.

## Claims

1. A clamping or gripping device (10, 100), having two main cheeks (12, 14), which can be moved toward or away from each other, and between which a housing section (16) is arranged at least over portions, **characterized in that** both main cheeks (12, 14) are movably connected in the operating directions with a counter cheek (24, 26) respectively assigned to them and arranged on the other side of the housing section (16), wherein synchronization means (48, 49, 50, 51, 102) for synchronizing the two movements are provided between the main cheek (12, 14) provided on the same side of the housing section (16) and the counter cheek (24, 26).

2. The device (10, 100) in accordance with claim 1, **characterized in that** driving means (30, 32) for moving the main cheeks (12, 14) and the counter cheeks (24, 26) in the operating directions are provided on or in the housing section (16).

3. The device (10, 100) in accordance with claim 1, **characterized in that** at least one cylinder chamber (30, 32), which can be charged with pressure, is provided as the driving means in the housing section (16), which is engaged by piston sections (34, 36) arranged at the main cheek side, or respectively the counter cheek side, for moving the main cheeks (12, 14), or respectively the counter cheeks (24, 26), by applying pressure.

4. The device (10, 100) in accordance with claim 1 or 2, **characterized in that** spring elements are provided as driving means on or in the housing section, which charge the counter cheeks (24, 26), or respectively the main cheeks (12, 14), with pressure.

5. The device (10, 100) in accordance with claim 2 or 3, **characterized in that** the at least one cylinder chamber (30, 32) is arranged extending in the operating direction and is open on both sides in the axial direction in such a way that the piston sections (34, 36) arranged at the main cheek side, or respectively the counter cheek side, enter into the cylinder chamber (30, 32).

6. The device (10, 100) in accordance with claim 2, 3 or 4, **characterized in that** the at least one cylinder chamber (30, 32) is arranged laterally offset in relation to the center linear axis (40) of the device, and/or that, when two cylinder chambers (30, 32) are provided, these are located on different levels extending perpendicularly in relation to the center linear axis (40).

7. The device (10, 100) in accordance with one of the preceding claims, **characterized in that** the one main cheek, or both main cheeks (12, 14), is/are movably connected with the associated counter cheek (14, 26) via a connecting rod (28).

8. The device (10, 100) in accordance with claim 7, **characterized in that** the connecting rod (28) is guided in guide devices (46) of the housing sections.

9. The device (10, 100) in accordance with at least one of the preceding claims, **characterized in that** the synchronization means (48, 49, 50, 51, 102) are embodied as traction and/or pressure transmission means, which are movably guided in the housing section (16).

10. The device (10, 100) in accordance with at least one of the preceding claims, **characterized in that** the synchronization means (48, 49, 50, 51, 102) are arranged around a passage (60) extending in the area of the center linear axis (40) in an axial direction.

11. The device (10, 100) in accordance with at least one of the preceding claims, **characterized in that** the synchronization means include spheres, which are arranged at least in sections of a channel extending from the one base cheek (12, 14) to the counter cheek (24, 26) arranged on the same side of the housing section.

12. The device (10, 100) in accordance with at least one of the preceding claims, **characterized in that** for redirecting the movement of the main cheek (12, 14), or respectively the counter cheek (24, 26), the synchronization means include a redirecting element (50, 51, 102) extending over approximately 180°, which works together, directly or indirectly via intermediate elements (48, 49), with the respective main cheek (12, 14) and counter cheek (24, 26).

13. The device (10) in accordance with claim 12, **characterized in that** the redirecting element (50, 51) is embodied in the form of an annular section, which runs substantially cylindrically and extends over approximately 180°.

14. The device (100) in accordance with claim 12, **characterized in that** the redirection element (102) is embodied as a full ring having at least two contact sections (104, 106, 108, 110) for intermediate elements, which in a view from above are separated by approximately 180°.

15. The device (100) in accordance with claim 14, **characterized in that** the contact sections (104, 106, 108, 110) are located on different levels, which extend perpendicularly in respect to the center linear axis.

16. The device (100) in accordance with claim 14 or 15, **characterized in that** a total of four contact sections (104, 106, 108, 110) is provided, of which respectively two are arranged on the axial top and two on the axial bottom of the full ring (102).

17. The device (100) in accordance with claim 16, **characterized in that** respectively one contact section (104, 106, 108, 110) arranged on the top and one arranged on the bottom act together via respectively one intermediate element (48, 49) each with a main cheek (12, 14) and a counter cheek (24, 26) on respective sides of the housing section (16).

18. The device (100) in accordance with at least one of the preceding claims, **characterized in that** a passage (60) in the central area of the housing section (16) and an assembly aid (118), which can be inserted in the axial direction into the passage (60), are provided in such a way that, with the assembly aid (118) inserted into the passage (60), gripping fingers (20), which are arranged on the main cheeks (12, 14) and can be adjusted in the operating direction, are brought into centered contact against stop sections (120) of the assembly aid (118) and subsequently can be fixed in place on the main cheeks.

## Revendications

1. Dispositif de serrage ou de préhension (10, 100) comportant deux mâchoires principales (12, 14) pouvant être rapprochées l'une de l'autre et éloignées l'une de l'autre dans les directions de travail entre lesquelles est agencée au moins par endroits une partie de boîtier (16), **caractérisé en ce que** les deux mâchoires principales (12, 14) sont couplées en mouvement dans les directions de travail à une contre-mâchoire (24, 26) associée à celles-ci et agencée sur l'autre côté de la partie de boîtier (16), des moyens de synchronisation (48, 49, 50, 51, 102) étant prévus entre la mâchoire principale (12, 14) et la contre-mâchoire (24, 26) prévues sur le même côté de la partie de boîtier (16) pour la synchronisation des deux mouvements.

2. Dispositif (10, 100) selon la revendication 1, **caractérisé en ce qu'**il est prévu, sur ou dans la partie de boîtier (16), des moyens d'entraînement (30, 32) destinés à déplacer les mâchoires principales (12, 14) et les contre-mâchoires (24, 26) dans les directions de travail.

3. Dispositif (10, 100) selon la revendication 1, **caractérisé en ce qu'**il est prévu comme moyens d'entraînement dans la partie de boîtier (16) au moins un espace cylindrique (30, 32) pouvant être mis sous pression, dans lequel s'engagent des parties de piston (34, 36) agencées côté mâchoires principales ou côté contre-mâchoires pour le déplacement sous pression des mâchoires principales (12, 14) ou des contre-mâchoires (24, 26).

4. Dispositif (10, 100) selon les revendications 1 ou 2, **caractérisé en ce qu'**il est prévu comme moyens d'entraînement dans ou sur la partie de boîtier des éléments à ressort qui mettent sous pression les contre-mâchoires (24, 26) ou les mâchoires principales (12, 14).

5. Dispositif (10, 100) selon les revendications 2 ou 3, **caractérisé en ce que** ledit au moins un espace cylindrique (30, 32) est agencé de manière à s'étendre dans la direction de travail et est ouvert des deux côtés dans la direction axiale de façon que les parties de piston (34, 36) agencées côté mâchoires principales ou contre-mâchoires s'engagent dans l'espace cylindrique (30, 32).

6. Dispositif (10, 100) selon les revendications 2, 3 ou 4, **caractérisé en ce que** ledit au moins un espace cylindrique (30, 32) est agencé de façon décalée latéralement par rapport à l'axe longitudinal médian (40) du dispositif et/ou **en ce que**, s'il est prévu deux espaces cylindriques (30, 32), ceux-ci sont situés dans des plans différents s'étendant perpendiculairement à l'axe longitudinal médian (40).

7. Dispositif (10, 100) selon l'une des revendications précédentes, **caractérisé en ce** l'une des mâchoires principales ou les deux (12, 14) est ou sont couplée(s) en mouvement à la contre-mâchoire (14, 26) qui leur est associée par le biais d'une tige de liaison (28).

8. Dispositif (10, 100) selon la revendication 7, **caractérisé en ce que** la tige de liaison (28) est guidée dans des guidages (46) côté partie de boîtier.

9. Dispositif (10, 100) selon au moins l'une des revendications précédentes, **caractérisé en ce que** les moyens de synchronisation (48, 49, 50, 51, 102) sont réalisés sous la forme de moyens de transmission de poussée et/ou de traction guidés de manière mobile dans la partie de boîtier (16).

10. Dispositif (10, 100) selon au moins l'une des revendications précédentes, **caractérisé en ce que** les moyens de synchronisation (48, 49, 50, 51, 102) sont agencés autour d'une ouverture (60) s'étendant dans la direction axiale dans la zone de l'axe longitudinal médian (40).

11. Dispositif (10, 100) selon au moins l'une des revendications précédentes, **caractérisé en ce que** les moyens de synchronisation comportent des billes qui sont agencées au moins par endroits dans un couloir s'étendant dans la partie de boîtier (16) d'une mâchoire principale (12, 14) à la contre-mâchoire (24, 26) agencée sur le même côté de la partie de boîtier.

12. Dispositif (10, 100) selon au moins l'une des revendications précédentes, **caractérisé en ce que** les moyens de synchronisation comprennent, pour le changement de direction du mouvement de la mâchoire principale (12, 14) ou de la contre-mâchoire (24, 26), un élément de renvoi (50, 51, 102) s'étendant au moins sur environ 180°, lequel élément de renvoi coopère directement ou indirectement par le biais d'éléments intermédiaires (48, 49) avec la mâchoire principale (12, 14) et la contre-mâchoire (24, 26) concernées.

13. Dispositif (10) selon la revendication 12, **caractérisé en ce que** l'élément de renvoi (50, 51) est réalisé sous la forme d'une partie annulaire s'étendant sur environ 180° et de manière essentiellement cylindrique.

14. Dispositif (100) selon la revendication 12, **caractérisé en ce que** l'élément de renvoi (102) est réalisé sous forme d'anneau complet, avec au moins deux parties d'appui (104, 106, 108, 110) éloignées d'environ 180° vues de dessus, pour des éléments intermédiaires.

15. Dispositif (100) selon la revendication 14, **caractérisé en ce que** les parties d'appui (104, 106, 108, 110) sont situées dans des plans différents s'étendant perpendiculairement à l'axe longitudinal médian.

16. Dispositif (100) selon les revendications 14 ou 15, **caractérisé en ce qu'**il est prévu en tout quatre parties d'appui (104, 106, 108, 110), deux d'entre elles étant agencées sur le côté supérieur axial et deux sur le côté inférieur axial de l'anneau complet (102).

17. Dispositif (100) selon la revendication 16, **caractérisé en ce qu'**une partie d'appui (104, 106, 108, 110) agencée sur le côté supérieur et une sur le côté inférieur coopèrent par le biais d'au moins un élément intermédiaire (48, 49) avec une mâchoire principale (12, 14) et une contre-mâchoire (24, 26) sur un côté de la partie de boîtier (16).

18. Dispositif (100) selon au moins l'une des revendications précédentes, **caractérisé en ce qu'**il est prévu une ouverture (60) dans la zone centrale de la partie de boîtier (16) et une aide d'assemblage (118) pouvant être introduite dans l'ouverture (60) dans la direction axiale de telle façon que, lorsque l'aide d'assemblage (118) est introduite dans l'ouverture (60), des doigts de préhension (20) agencés sur les mâchoires principales (12, 14) et réglables dans les directions de travail peuvent être amenés en butée de manière centrée contre des parties de butée (120) de l'aide d'assemblage (118) et fixés ensuite sur les mâchoires principales.
